# EUROPEAN PATENT APPLICATION

(11) **EP 2 819 088 A1**
(43) Date of publication of application: **31.12.2014**
(21) Application number: 13751995.5
(22) Date of filing: 12.02.2013
(51) Int. Cl.: G06Q 50/10

(54) **SERVER DEVICE, INFORMATION DISCLOSURE CONTROL METHOD, AND RECORDING MEDIUM**

(30) Priority: 20.02.2012 JP 2012034375
(71) Applicant: NEC CASIO Mobile Communications, Ltd., Kawasaki-shi Kanagawa 211-8666 (JP)
(72) Inventor: TAI, Ryusuke, Kanagawa 211-8666 (JP)
(74) Representative: Vossius & Partner
(86) International application number: PCT/JP2013/053278
(87) International publication number: WO 2013/125394

(57) **Abstract**

A data storage (2) stores data that is transmitted from a poster terminal, in association with a time and date at which the data was transmitted. A setter (5) sets, for identification information of a user who is to browse the data of the poster, a browsable period for allowing the user to browse the data. In response to a data access request transmitted from a user terminal, a controller (6) refers to the time and date of the data stored in the data storage (2) and the browsable period set for the identification information of the user included in the data access request, and transmits the data transmitted at the time and date, to the user terminal when the time and date are within the browsable period.

## Description

### Technical Field

The present disclosure relates to a server device, an information disclosure control method, and a recording medium.

### Background Art

Social networking services (referred to simply as "SNS" below) on the Internet are known. A device, such as a server, for example, provides an SNS that discloses data posted by each user of the SNS, to other users.

For example, the device disclosed in Patent Literature 1 discloses data, such as a posted image of a user, only to users who have a friend status with the user.

### Citation List

### Patent Literature

Patent Literature 1: Unexamined Japanese Patent Application Kokai Publication No. 2011-128775.

### Summary of Invention

### Technical Problem

Some users who post data desire to disclose the data only to close friends while limiting data to be disclosed to less-close friends to a narrower range than that for the close friends.

However, the above-described device disclosed in Patent Literature 1 discloses all data each user has posted, to any user who has newly obtained a friend status with the user, which may sometimes lead to a situation of disclosing data despite the unintention of the user. Hence, the above-described device disclosed in Patent Literature 1 cannot set a range of data to be disclosed, according to users' intension.

The present disclosure has been made in view of the above-described circumstances, and has an objective to provide a server device, an information disclosure control method, and a recording medium that are capable of setting a range of data to be disclosed more appropriately.

### Solution to Problem

To achieve the above-described objective, a server device according to the first aspect of the present disclosure includes: a data storage that stores data of a poster that is transmitted from a terminal, in association with a time and date at which the data was transmitted; a setter that sets, for identification information of a user who is to browse the data of the poster, a browsable period for allowing the user to browse the data transmitted in the period; and a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.

Moreover, an information disclosure control method according to the second aspect of the present disclosure includes: a data storing step of storing data of a poster that is transmitted from a terminal, in association with a time and date at which the data was transmitted; a setting step of setting, for identification information of a user who is to browse the data of the poster, a browsable period for allowing the user to browse the data transmitted in the period; and a controlling step of, in response to a data access request from the user transmitted from a terminal of the user, referring to the time and date of the data stored in the data storing step and the browsable period set for the identification information of the user included in the data access request, and transmitting the data transmitted at the time and date, to the terminal of the user when the time and date are within the browsable period.

A recording medium according to the third aspect of the present disclosure is a computer readable recording medium recording a program for causing a computer to function as: a data storage that stores data of a poster that is transmitted from a terminal, in association with a time and date at which the data was transmitted; a setter that sets, for identification information of a user who is to browse the data of the poster, a browsable period for allowing the user to browse the data transmitted in the period; and a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.

### Advantageous Effects of Invention

According to the present disclosure, a range of data to be disclosed can be set more appropriately.

### Brief Description of Drawings

FIG. 1 is a block diagram showing a communication system including a server device according to Embodiment 1;
FIG. 2 is a block diagram showing a hardware configuration of the server device shown in FIG. 1;
FIG. 3 is a block diagram showing a functional configuration of the server device shown in FIG. 1;
FIG. 4 is a table showing an example of a time and date management table;
FIG. 5 is a table showing an example of a disclosure relationship database;
FIG. 6 is a table showing an example of a browsable period table;
FIG. 7 is an explanatory drawing showing an example of setting browsable periods;
FIG. 8 is a drawing showing an example of an image displayed on a user terminal;
FIG. 9 is a flowchart showing an example of an information disclosure control process according to Embodiment 1;
FIG. 10 is an explanatory drawing showing another example of setting browsable periods;
FIG. 11 is a flowchart showing an example of a closeness-degree update process according to Embodiment 3; and
FIG. 12 is a table showing an example of part of the disclosure relationship database.

### Description of Embodiments

Embodiments according to the present disclosure will be described with reference to the drawings.

### (Embodiment 1)

First, a communication system 500 including a server device 100 according to Embodiment 1 of the present disclosure will be described.

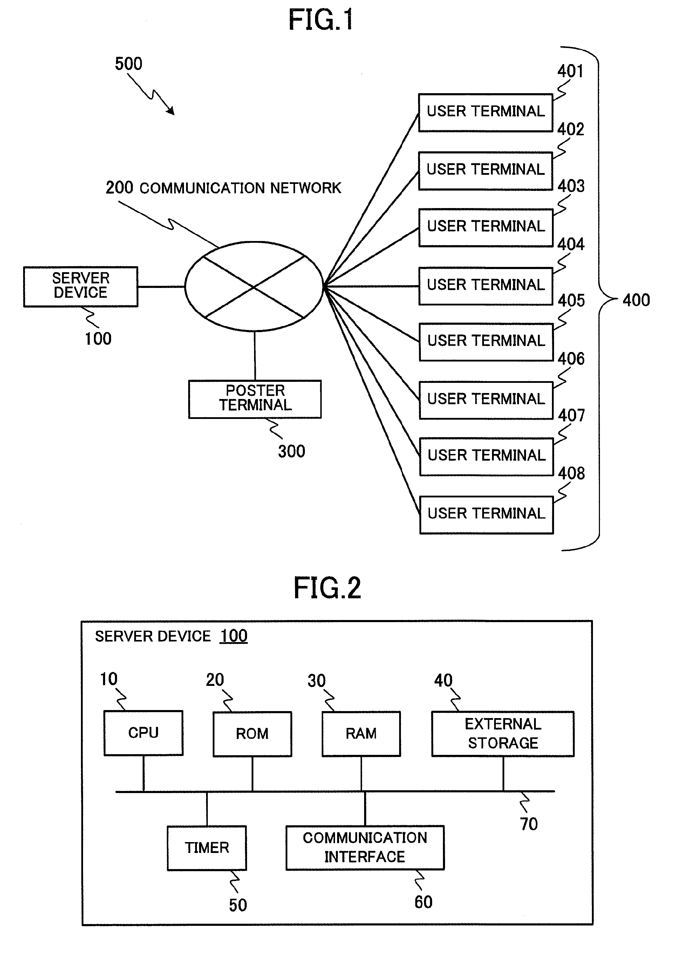

The communication system 500 shown in FIG. 1 includes the server device 100, a poster terminal 300, and user terminals 400 (401 to 408). The server device 100, the poster terminal 300 and the user terminals 400 are connected via a communication network 200.

For easy understanding, the user of the poster terminal 300 is referred to as a poster in this embodiment. Moreover, the users of the user terminals 401, 402, 403, 404,405, 406, 407, and 408 are referred to as a user A, user B, user C, user D, user E, user F, user G, and user H, respectively. Furthermore, each of the user terminals 401 to 408 is referred to simply as the user terminal 400 when any one particular device need not be specified. Similarly, each of the users A to H is referred to simply as a user when any one particular user need not be specified.

The server device 100 is a computer device providing an SNS.

Specifically, the server device 100 provides various services for facilitating connections between people, to the poster and the users through the SNS. For example, the server device 100 provides a diary service for disclosing daily occurrences. Using the diary service, the poster can disclose a diary entry to the users by transmitting the text data of the diary entry from the poster terminal 300 to the server device 100. As another example, the server device 100 provides a bulletin board service that enables communication exchanges under a particular theme such as hobby or geographic area. Using the bulletin board service, the poster and the users can write comments on a certain bulletin board for a hobby, geographic area, or the like, and browse the comments from the others, via the poster terminal 300 and the user terminals 400.

As another example, the server device 100 provides a one-on-one direct message (DM) service between one user and another user both using the SNS. Using the DM service, the poster can transmit the text data of a DM transmitted with a specified user to the server device 100 from the poster terminal 300, to the user terminal 400 of the specified user. As another example, the server device 100 provides a service for disclosing, to the users, image data such as photos and videos posted by the poster via the poster terminal 300. Using each of the above-described services, the poster can disclose, to the users, various data such as the text data of a diary entry, the text data of comments written on a bulletin board, image data such as photos, or the like. In this embodiment, the term, data, includes text data of diaries, comments, and DMs, as well as image data such as photos.

An SNS is a service for building social networks on the Internet. Each of the poster and the users can use the service of the SNS by acquiring an account to become a member. For example, assume that the poster and the user A, who are members, get to know each other via one of the services of the SNS and establish a friend relationship. In this case, the server device 100 registers the user A as a target user to whom the data of the poster is to be disclosed. At the same time, the server device 100 registers the poster as a target user to whom the data of the user A is to be disclosed. The relationship in which the server device 100 registers each of the members having a friend relationship with each other as a data disclosure target user of the other and thereby discloses their data each other, is referred to as a "disclosure relationship." In the above-described example, the poster and the user A have a disclosure relationship. To establish a friend relationship, one member requests a different member to be friends, and then the different member accepts the friend request. In the above example, the server device 100 registers each of the members as a data disclosure target user of the other upon establishment of a friend relationship. However, the server device 100 may register the members as data disclosure target users regardless of whether a friend relationship is established. For example, when the user A sends a friend request to the poster and the poster accepts the friend request, the server device 100 registers the user A as a target user to whom the data of the poster is to be disclosed. On the other hand, when the poster sends a friend request to the user A and the user A accepts the friend request, the server device 100 registers the poster as a target user to whom the data of the user A is to be disclosed.

Return to FIG. 1. The communication network 200 is, for example, the Internet. The poster terminal 300 and the user terminals 400 can use the SNS provided by the server device 100 by accessing the server device 100 via the Internet.

The communication network 200 is also connected to various servers that are not shown. The poster and the users can use the services provided by the various servers via the Internet in addition to the SNS provided by the server device 100, by using the poster terminal 300 and the user terminals 400, respectively.

The poster terminal 300 and the user terminals 400 are each configured of a PC (Personal Computer), for example. The poster terminal 300 and the user terminals 400 each include a communication function, a display function, and the like. The poster terminal 300 posts data to the SNS by transmitting the data to the server device 100 using the communication function. The poster terminal 300 downloads the data posted to the SNS, from the server device 100, by transmitting a data access request to the server device 100. The poster terminal 300 can check the data posted to the SNS, by displaying the downloaded data by using the display function. The user terminal 400 downloads the data posted to the SNS, from the server device 100, by transmitting a data access request to the server device 100, and then displays the downloaded data by using the display function. The user terminals 400 can also post data to the SNS by transmitting the data to the server device 100 by using the communication function.

Next, the server device 100 will be described in detail.

The hardware configuration of the server device 100 will be described with reference to FIG. 2. The server device 100 includes hardware components, that is, a CPU (Central Processing Unit) 10, a ROM (Read Only Memory) 20, a RAM (Random Access Memory) 30, an external storage 40, a timer 50, and a communication interface 60. These hardware components are connected to each other via an internal bus 70.

The CPU 10 is a central processing unit that is mounted on the server device 100 to control the server device 100.

The ROM 20 is a nonvolatile memory for storing a program that tests the hardware when the power of the server device 100 is turned on, a program for executing the bootstrap to start the OS, and the like.

The RAM 30 is a volatile memory that temporarily stores various programs to be executed by the CPU 10 and is used as a work space when the CPU 10 performs various processes.

The external storage 40 is storage means such as a hard disk, for example. The external storage 40 stores various programs to be executed by the CPU 10. Moreover, the external storage 40 also stores parameters necessary for the execution of the programs. The various programs include application programs such as a browser used to use the SNS, the OS (Operation System), and the like.

The timer 50 is time means for calculating clock time.

The communication interface 60 is an interface for the server device 100 to transmit data to and receive data from the poster terminal 300 and the user terminals 400. Specifically, the communication interface 60 performs data processing related to data communications with the poster terminal 300 and the user terminals 400 by using a transmitter-receiver circuit.

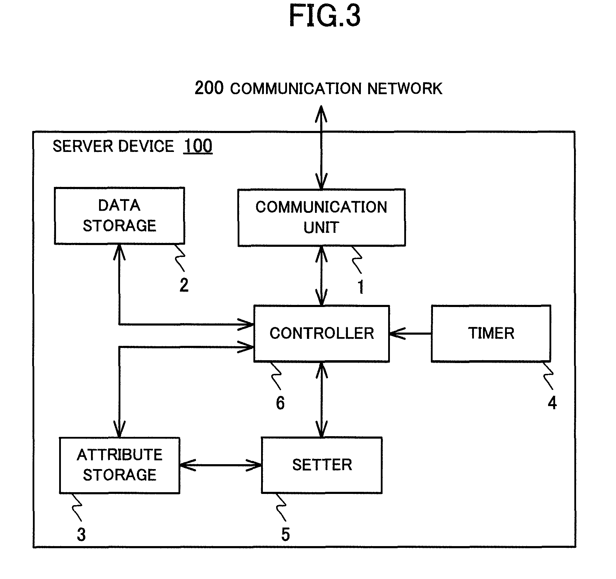

In the server device 100 with the above hardware configuration, the CPU 10 reads out the various programs stored in the external storage 40 to load the programs into the RAM 30. Then, the CPU 10 controls the server device 100 according to the programs loaded into the RAM 30, thereby implementing the functions of the components as those shown in FIG. 3. As shown in FIG. 3, the server device 100 includes a communication unit 1, a data storage 2, an attribute storage 3, a timer 4, a setter 5, and a controller 6.

First, the communication unit 1 transmits data to and receives data from external devices. For example, the communication unit 1 transmits data to and receives data from the poster terminal 300 and the user terminals 400.

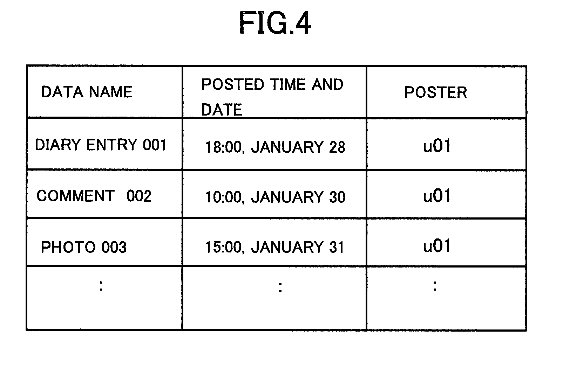

Then, the data storage 2 stores data of the poster transmitted from the poster terminal 300 in association with the time and date at which the data was transmitted. FIG. 4 shows an example of a time and date management table stored in the data storage 2. In the time and date management table, the data name, the posted time and date, and the poster are associated. The data name is a name that can specify posted data uniquely. The posted time and date are time and date at which the poster posted the data. The poster is a unique ID of the entity that posted the data.

Referring to the time and date management table shown in FIG. 4, the table shows that the text data of a diary "Diary Entry 001" was posted at "18:00, January 28" by the poster having the ID "u01." The table shows that the text data of a comment "Comment 002" written in a bulletin board was posted at "10:00, January 30" by the poster having the ID "u01." The table shows that the image data of a photo "Photo 003" was posted at "15:00, January 31" by the poster having the ID "u01." The data storage 2 stores data (text data or image data) corresponding to each data name in the time and date management table.

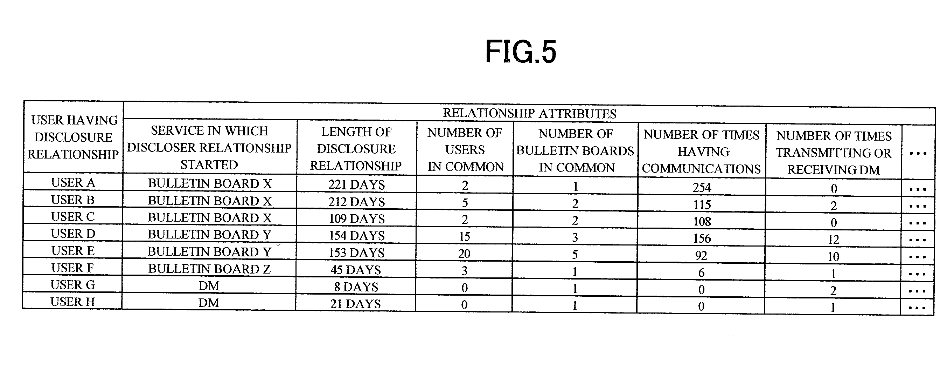

Return to FIG. 3. The attribute storage 3 stores a disclosure relationship database as that shown in FIG. 5. In the disclosure relationship database, relationship attribute indicating the relationship between the poster and the user is associated with each of the users A to H. The relationship attributes include the service of the SNS in which the disclosure relationship between the poster and the user started, and parameters each serving as an index indicating the strength of the relationship between the poster and the user. The parameters each serving as an index indicating the strength of the relationship between the poster and the user are, for example, the length of the disclosure relationship, the number of users in common, the number of bulletin boards in common, the number of times having communications, and the number of times transmitting or receiving a DM. Note that the parameters each serving as an index indicating the strength of the relationship between the poster and the user are not limited to the above-described parameters, and different parameters may be used instead.

The length of the disclosure relationship corresponds to the number of days the disclosure relationship between the poster and the user has been held. The number of users in common corresponds to the number of users who are in common between the users having a disclosure relationship with the poster and the users having a disclosure relationship with the user. The number of bulletin boards in common corresponds to the number of bulletin boards that are in common between the bulletin boards used by the poster and the bulletin boards used by the user. The number of times having communications corresponds to the number of comments posted between the poster and the user in any of the bulletin boards. The number of times transmitting or receiving a DM corresponds to the number of times a DM is transmitted or received between the poster and the user.

In addition, the services of the SNS in which the disclosure relationship started are, for example, bulletin boards X, Y, and Z, and DM.

For example, as for the user A, the table shows that the user A and the poster get to know each other via the bulletin board X, and established a disclosure relationship. The length of the disclosure relationship between the poster and the user A is 221 days. The number of users in common between the poster and the user A is two. The number of bulletin boards in common used by the user A and the poster is one. This indicates that the bulletin board is the bulletin board X. The number of times having communications in the bulletin board X between the user A and the poster is 254. The number of times transmitting or receiving a DM between the user A and the poster is 0.

On the other hand, as for the user B, the table shows that the user B and the poster became acquainted with each other via the bulletin board X, and established a disclosure relationship. The length of the disclosure relationship between the poster and the user B is 212 days. The number of users in common between the poster and the user B is five. The number of bulletin boards in common used by the user B and the poster is two. This indicates that the bulletin boards are the bulletin board X and another bulletin board. The number of times having communications in the bulletin boards or the like between the user B and the poster is 115. The number of times transmitting or receiving a DM between the user B and the poster is two.

As described above, the strength of the relationship between the poster and each user is obtained with reference to the disclosure relationship database. The data storage 2 and the attribute storage 3 are included in the storage area of the external storage 40.

Return to FIG. 3. The timer 4 calculate clock time. The timer 4 inputs each calculated time to the controller 6.

Next, the setter 5 sets, for identification information of each user who is to browse data of the poster, a browsable period for allowing the user to browse the data. Specifically, the setter 5 sets a browsable period for the identification information of each of the users A to H having a disclosure relationship with the poster, on the basis of the corresponding relationship attribute stored in the attribute storage 3. Here, the browsable period corresponds to the period from the time and date of the initial point to the time and date of the end point. However, the browsable period is not limited to the period from the time and date of the initial point to the time and date of the end point. For example, reference time and date is determined in advance, and the browsable period may be set as the period before or after the reference time and date. Alternatively, only dates, instead of times and dates, may be specified for the browsable period.

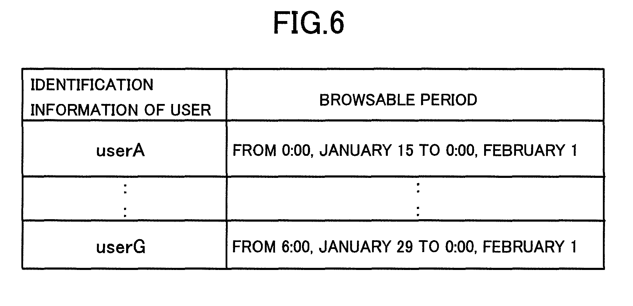

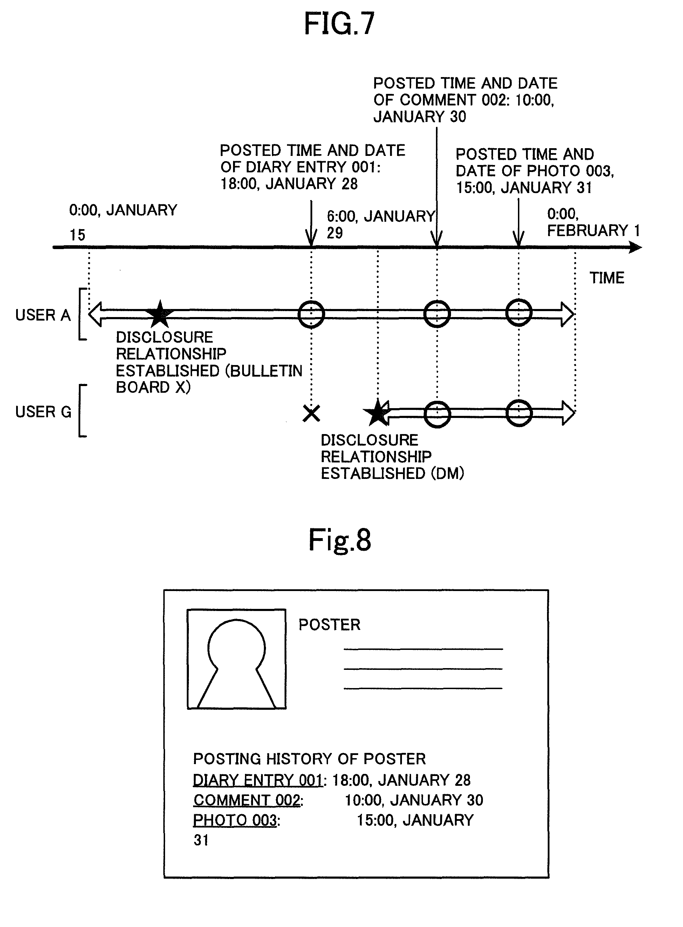

In the following, the setting of browsable periods will be described with reference to FIG. 6. For example, the setter 5 sets the browsable period on the basis of the service in which the disclosure relationship started, among the relationship attributes in the disclosure relationship database. Since the poster and the user A established a disclosure relationship via the bulletin board X, the setter 5 sets, for the identification information of the user A, a browsable period from "0:00, January 15" to "0:00, February 1," for example. Meanwhile, since the poster and the user G established a disclosure relationship via the DM, the setter 5 sets, for the identification information of the user G, the browsable period from "6:00, January 29" to "0:00, February 1," for example. Consequently, as shown in FIG. 7, 18:00, January 28, which is the time and date at which Diary Entry 001 was posted, is within the browsable period set for the user A. Hence, Diary Entry 001 is disclosed to the user A. On the other hand, 18:00, January 28, which is the time and date at which Diary Entry 001 was posted, is not within the browsable period set for the user G. Hence, Diary Entry 001 is not disclosed to the user G. Both 10:00, January 30, which is the time and date at which Comment 002 was posted, and 15:00, January 31, which is the time and date at which Photo 003 was posted, are within the browsable periods set for the respective users A and G. Hence, Comment 002 and Photo 003 are disclosed to Users A and G.

Return to FIG. 3. The controller 6 inputs, to the data storage 2, data transmitted from the poster terminal 300 and the time and date at which the data was transmitted. The data storage 2 creates and stores the above-described time and date table in FIG. 4, by associating the input data and the time and date. The controller 6 acquires the time and date at which the data was transmitted, on the basis of the time input by the timer 4.

In addition, upon receipt of an access request from the poster terminal 300 or any of the user terminals 400 via the communication unit 1, the controller 6 performs the process corresponding to what is requested by the access request. Examples of the access request include an access request asking for permission to use a service of the SNS, an access request asking for permission to access the detailed-information page of the poster, a data access request asking for permission to browse data of the poster, and the like. For example, upon receipt of an access request asking for permission to use a service of the SNS from any one of the poster terminal 300 and the user terminals 400, the controller 6 performs a process for providing the service of the SNS to the corresponding one of the poster and the users. Specifically, the controller 6 transmits the data (such as text data and image data) forming, for example, the bulletin board X, which is a service of the SNS, to a source of the access request. After the controller 6 provided the service of the SNS to the corresponding user, the attribute storage 3 updates the relationship attributes shown in FIG. 5 for the user, according to the use of the service by the user (for example, according to the number of times the user transmitted a comment to or received a comment from the poster in the bulletin board X, when the comment is transmitted or received).

In addition, upon receipt of an access request asking for permission to access the detailed-information page of the poster from one of the user terminals 400, the controller 6 transmits the image data shown in FIG. 8 to the user terminal 400. The user terminal 400 generates an image based on the image data, and displays a detailed-information page of the poster on the screen of the terminal. The displayed detailed-information page of the poster includes information on the poster such as the profile, and a posting history, which is a list of data that the poster has posted to the SNS in the past. The posting history includes the data names (Diary Entry 001, Comment 002, and Photo 003) each having an embedded link to be used by the user terminal 400 to send a data access request, and the posted time and date of the data. The user A can transmit a data access request asking for permission to access Diary Entry 001, to the server device 100, by clicking the link of Diary Entry 001, for example.

When the user A started to use the SNS, the user A logged in the own account of the SNS, and the data access request includes the identification information of the user A. In response to the data access request from the user transmitted by the user terminal 400, the controller 6 refers to the time and date of the corresponding data in the time and date table stored in the data storage 2, and the browsable period set for the identification information of the user included in the data access request. Then, when the referred time and date are within the browsable period, the controller 6 transmits the data transmitted at the time and date, to the user terminal 400. Specifically, when the user A clicks the link of Diary Entry 001, the controller 6 receives a data access request via the communication unit 1. Then, the controller 6 acquires the posted time and date corresponding to Diary Entry 001, with reference to the time and date management table. In addition, the controller 6 acquires the browsable period set for the identification information of the user A included in the data access request. In this example, 18:00, January 28, which is the posted time and date of Diary Entry 001, is within the browsable period of the use A, which is from 0:00, January 15 to 0:00, February 1. Accordingly, the controller 6 transmits the text data of Diary Entry 001 to the user terminal 401 via the communication unit 1. In addition, the posted time and date of each of Comment 002 and Photo 003 are also within the browsable period of the user A. Accordingly, in response to a data access request, the controller 6 transmits the data of the corresponding one of Comment 002 and Photo 003 to the user terminal 401.

On the other hand, 18:00, January 28, which is the posted time and date of Diary Entry 001, is not within the browsable period of the user G, which is from 6:00, January 29 to 0:00, February 1. Accordingly, upon receipt of a data access request asking for permission to access Diary Entry 001 from the user terminal 407 of the user G, the controller 6 transmits a message indicating that the data cannot be disclosed, to the user terminal 407 of the user G. By contrast, the posted time and date of each of Comment 002 and Photo 003 are within the browsable period of the user G. Accordingly, in response to a data access request asking for permission to access Comment 002 or Photo 003, the controller 6 transmits the data of the corresponding one of Comment 002 and Photo 003 to the user terminal 407 of the user G.

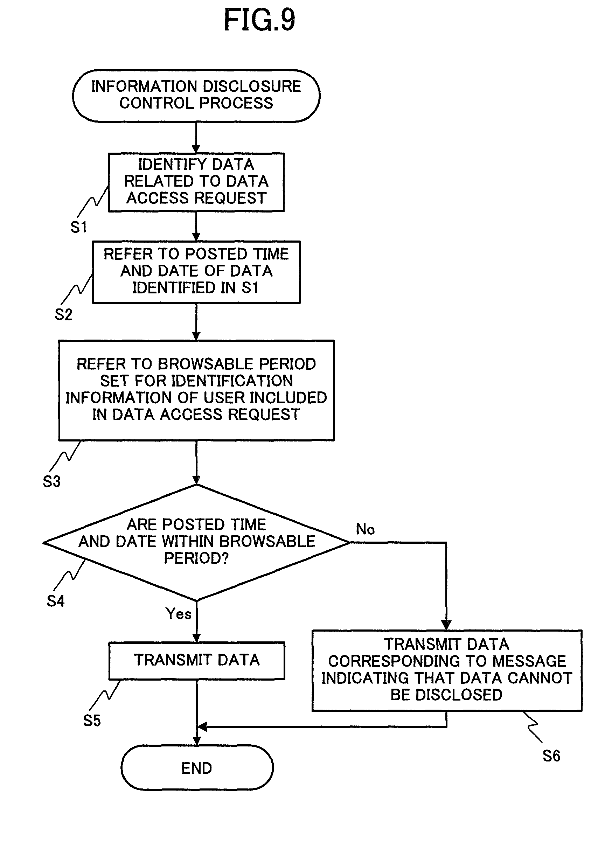

An aspect of the server device 100 described above with reference to FIGS. 1 to 8 is, for example, as follows. In response to a data access request from a user transmitted from the corresponding user terminal 400, the server device 100 refers to the posted time and date of the corresponding data in the time and date management table in FIG. 4 and the browsable period set for the identification information of the user included in the data access request. Then, when the referred time and date are within the browsable period, the data that was transmitted at the time and date is transmitted to the user terminal 400, which is one of features of the server device 100. In the following, the flow of an information disclosure control process related to this aspect will be described with reference to the flowchart in FIG. 9. The steps in the flowchart in FIG. 9 are performed by implementing the functions of the components shown in FIG. 3 by the CPU 10. The CPU 10 starts the information disclosure control process upon receipt of a data access request via the communication network 200. The data access request is transmitted to the server device 100 when the user clicks one of the data names (Diary Entry 001, Comment 002, and Photo 003) shown in FIG. 8 each having an embedded link.

First, upon receipt of a data access request, the CPU 10 identifies the data related to the data access request (Step S1). For example, the CPU 10 identifies the data according to an access destination to obtain the data indicated by the link clicked by the user.

Then, the CPU 10 refers to the posted time and date of the data identified in Step S1 (Step S2). Specifically, the CPU 10 refers to the posted time and date of the data in the time and date management table in FIG. 4. Thereafter, the CPU 10 refers to the browsable period set for the identification information of the user included in the data access request (Step S3). Specifically, the CPU 10 refers to the browsable period set for the identification information of the user, with reference to the browsable period table in FIG. 6. Thereafter, the CPU 10 determines whether or not the posted time and date of the data that was referred in Step S2 are within the browsable period that was referred in Step S3 (Step S4).

Then, when the posted time and date of the data are within the browsable period (Step S4; Yes), the CPU 10 transmits the data to the user terminal 400 that transmitted the data access request (Step S5). On the other hand, when the posted time and date of the data are not within the browsable period (Step S4; No), the CPU 10 transmits a message indicating that the data cannot be disclosed, to the user terminal 400 that transmitted the data access request (Step S6).

Among the operations performed by the CPU 10 in FIG. 9, Step S1 corresponds to the function of the setter 5, and Steps S2 to 5 correspond to the function of the controller 6. The CPU 10 carries out the above-described information disclosure control process on every receipt of a data access request.

According to Embodiment 1 described above, the server device 100 is provided with the data storage 2, the setter 5, and the controller 6, and thereby sets a browsable period for the identification information of each user on the basis of the relationship attributes and, when the posted time and date of the data related to the data access request are within the set browsable period, transmits the data posted at the posted time and date, to the user terminal 400 that transmitted the data access request. As described above, since each browsable period is set on the basis of the relationship attributes indicating the relationship between the poster and the corresponding user, the range of data to be disclosed can be set more appropriately.

In Embodiment 1, the setter 5 sets each browsable period on the basis of the service in which the disclosure relationship started, among the relationship attributes, however, setting of browsable periods is not limited to this. The setter 5 may set each browsable period on the basis of the length of the disclosure relationship, the number of users in common, the number of bulletin boards in common, the number of times having communications, or the number of time transmitting or receiving a DM, among the relationship attributes. For example, the setter 5 may set a longer browsable period for the user C with a length of the disclosure relationship of 109 days than the browsable period for the user G with a length of the disclosure relationship of 8 days. Alternatively, the setter 5 may set a predetermined browsable period for each user with a length of the disclosure relationship longer than the predetermined number of days. This is because a larger value of the length of the disclosure relationship, the number of users in common, the number of bulletin boards in common, the number of times having communications, or the number of times transmitting or receiving a DM is likely to indicate that the relationship between the poster and the user is stronger and therefore the amount of data which can be disclosed increase.

As described above, the relationship attributes include parameters each of which serves as an index indicating the strength of the relationship between the poster and each user, such as the length of the disclosure relationship, the number of users in common, the number of bulletin boards in common, the number of times having communications, and the number of time transmitting or receiving a DM. Since the parameters depend on the strength of the relationship between the poster and the corresponding user, the range of data to be disclosed can be set more appropriately according to the strength of the relationship.

In Embodiment 1, in response to an access request asking for permission to access the detailed-information page of the poster from any one of the user terminals 400, the controller 6 transmits image data including the posting history shown in FIG. 8 to the user terminal 400. However, response to an access request is not limited to this. For example, in response to an access request asking for permission to access to the detailed-information page of the poster from any one of the user terminals 400, the controller 6 determines whether or not the posted time and date of the corresponding data are within the browsable period set for the identification information of the user included in the access request. Then, the controller 6 may list only the data pieces each with the posted time and date being within the browsable period in the posting history on the detailed information page. Consequently, in the case of the user G, for example, the posting history does not include Diary Entry 001, but includes only Comment 002 and Photo 003, in the image shown in FIG. 8. In this way, the existence of the data which are not desired to be disclosed to the user G is not introduced to the user G, which is preferable from the poster's point of view. In addition, the controller 6 can omit the operation for transmitting, to the user terminal 400, a message indicating that the data cannot be disclosed (Step S6), which can reduce the processing load, processing time, and power consumption of the server device 100.

Moreover, description has been given of the information disclosure control process in FIG. 9 by assuming that the data related to a data access request (the data corresponding to the link of the data name clicked by the user) is one piece. However, the data related to a data access request does not need to be one piece, but may be multiple pieces. In this case, assume that the user sends a data access request without specifying any particular data name of the data that the user desires to browse, for example. Then, in response to the data access request, the server device 100 may retrieve multiple pieces of data each with the posted time and date being within the browsable period set for the identification information of the user included in the data access request, and transmit the retrieved data pieces to the device that transmitted the data access request.

### (Embodiment 2)

Next, a server device 100 according to Embodiment 2 will be described.

The hardware configuration of the server device 100 according to Embodiment 2 is the same as that of above-described Embodiment 1. The functional configuration of the server device 100 according to Embodiment 2 is different from that in above-described Embodiment 1 in that the function to be described below is added to the setter 5 in addition to the functions of the respective components in above-described Embodiment 1.

The setter 5 sets a closeness degree between the poster and each of the users A to H on the basis of the relationship attributes in the disclosure relationship database in FIG. 5. For example, the setter 5 calculates, for each user, a total value by adding up the respective parameter values of the length of the disclosure relationship, the number of users in common, the number of bulletin boards in common, the number of times having communications, and the number of times transmitting or receiving a DM, and sets the calculated total value as the closeness degree indicating the degree of closeness between the poster and the user.

Specifically, for the user A, the setter 5 sets 478, which is the total of the respective parameter values of the length of the disclosure relationship, the number of users in common, the number of bulletin boards in common, the number of times having communications, and the number of times transmitting or receiving a DM, as the closeness degree. Meanwhile, for the user G, the setter 5 sets 11 as the closeness degree. Alternatively, the setter 5 may set each closeness degree by calculating the total value while weighting at least one parameter value among those of the length of the disclosure relationship, the number of users in common, the number of bulletin boards in common, the number of times having communications, and the number of times transmitting or receiving a DM.

On the basis of each closeness degree thus set, the setter 5 sets a browsable period. In the above example, the setter 5 sets, for the user A having a closeness degree of 478, a browsable period from 0:00, January 15 to 0:00, February 1. Meanwhile, the setter 5 sets, for the user G having a closeness degree of 11, which is less than that of the user A, that is 478, a browsable period from 6:00, January 29 to 0:00, February 1, which is shorter than the period set for the user A.

According to Embodiment 2 described above, the setter 5 sets the degree of closeness between the poster and each of the users A to H on the basis of the relationship attributes in the disclosure relationship database. Then, the setter 5 sets a browsable period according to the obtained closeness degree. Since the closeness degree indicates the degree of closeness between the poster and the user, the range of data to be disclosed can be set in consideration of how close the poster and the user are.

Each closeness degree may be set by the poster. In this case, the setter 5 sets a browsable period on the basis of each closeness degree set by the poster.

Alternatively, the setter 5 may set a closeness degree for each of the users A to H on the basis of the priorities assigned by the poster to the services in which disclosure relationships started. For example, when the bulletin board X is assigned a higher priority than those assigned to the other bulletin boards Y and Z, the setter 5 may set a higher closeness degree for each of the users A, B and C having the bulletin board X as the service in which the disclosure relationship started, than that for each of the users D, E and F each having a different service as the service in which the disclosure relationship started. When the DM is assigned a lower priority than those assigned to the others, the setter 5 may set a lower closeness degree for each of the users G and H having the DM as the service in which the disclosure relationship started, than that for each of the other users A, B, C, D, E, and F.

### (Embodiment 3)

Next, a server device 100 according to Embodiment 3 will be described.

The hardware configuration of the server device 100 according to Embodiment 3 is the same as that of above-described Embodiment 2. The functional configuration of the server device 100 according to Embodiment 3 is different from that in above-described Embodiment 2 in that the function to be described below is added to the setter 5 in addition to the functions of the respective components in above-described Embodiment 2.

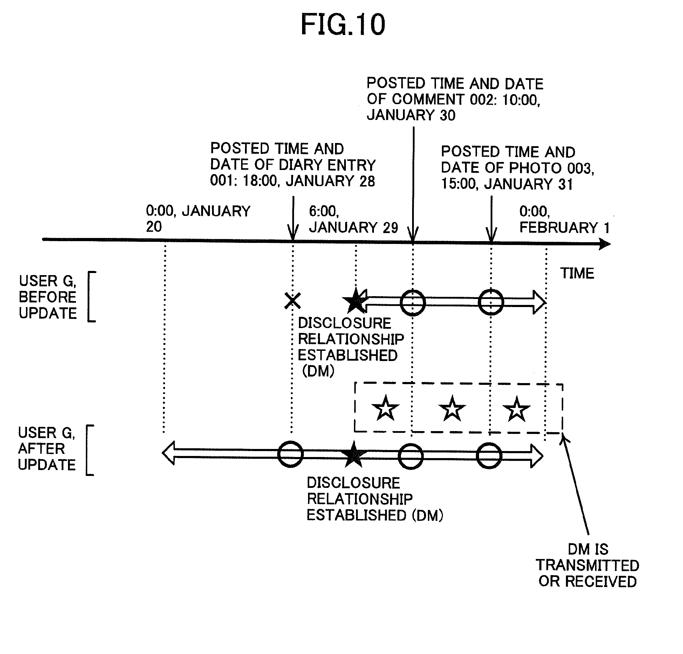

When any of the relationship attributes in the disclosure relationship database in FIG. 5 is updated, the setter 5 updates the closeness degree. Update of a closeness degree and setting of a browsable period by the setter 5 will be described with reference to FIG. 10. The period set for the user G before an update of the disclosure relationship database is shown as "before update." Assume that a DM is transmitted or received between the poster and the user G three times after 6:00, January 29, at which a disclosure relationship is established between the poster and the user G. As a result of this, the controller 6 updates the number of times transmitting or receiving a DM, which is one of the relationship attribute parameters, from two to five (see FIG. 5).

Since the relationship attribute parameter is updated, the setter 5 updates the closeness degree for the user G from 11 to 14. Then, the setter 5 sets a browsable period from 0:00, January 20 to 0:00 February 1 (shown as after update, in FIG. 10), for the identification information of the user G with the closeness degree increased to 14. Consequently, the text data of Diary Entry 001, which has not been disclosed to the user G having the browsable period before the update, is now disclosed to the user G.

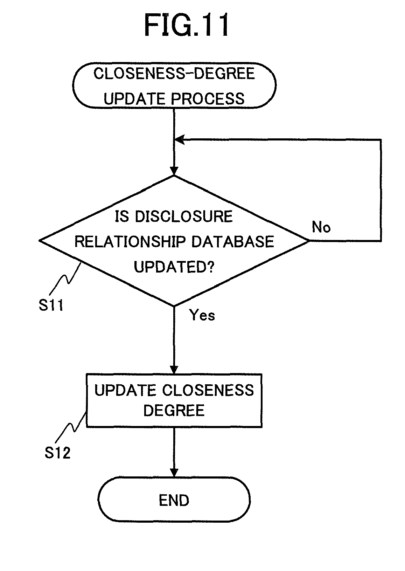

Next, the flow of a closeness-degree update process according to Embodiment 3 will be described with reference to FIG. 11. First, the CPU 10 waits until the disclosure relationship database is updated (Step S11; No). Specifically, the CPU 10 waits until any of the parameter values of the relationship attributes in FIG. 5 is updated. When the disclosure relationship database is updated (Step S 11; Yes), the CPU 10 updates a closeness degree (Step S12). Specifically, when any of the parameter values is updated, the CPU 10 calculates a closeness degree, which is the total of the parameter values, by using the updated parameter value, and then updates the closeness degree accordingly. The functions used in Steps S 11 and 12 correspond to the function of the setter 5.

According to Embodiment 3 described above, when any of the parameters of the relationship attributes in the disclosure relationship database is updated, the setter 5 updates the closeness degree. According to such configuration, each closeness degree can be updated according to changes in parameters serving as indices indicating how close the relationship between the poster and each of the users A to H is. Hence, the range of data to be disclosed can be set more appropriately according to the relationship between the poster and each of the users AtoH.

Alternatively, the setter 5 may decrease a closeness degree according to a change in any of the parameters of the relationship attributes in the disclosure relationship database. For example, when the frequency of transmitting or receiving a DM in a predetermined time period or the frequency of writing a comment to the bulletin board X in a predetermined time period decreases, the setter 5 updates the closeness degree of the user to be less. Consequently, the setter 5 sets a shorter browsable period for the user than that before the update.

### (Embodiment 4)

Next, a server device 100 according to Embodiment 4 will be described.

The hardware configuration of the server device 100 according to Embodiment 4 is the same as that of above-described Embodiment 1. The functional configuration of the server device 100 according to Embodiment 4 is different from that in above-described Embodiment 1 in that the function to be described below is added to the setter 5 in addition to the functions of the respective components in above-described Embodiment 1.

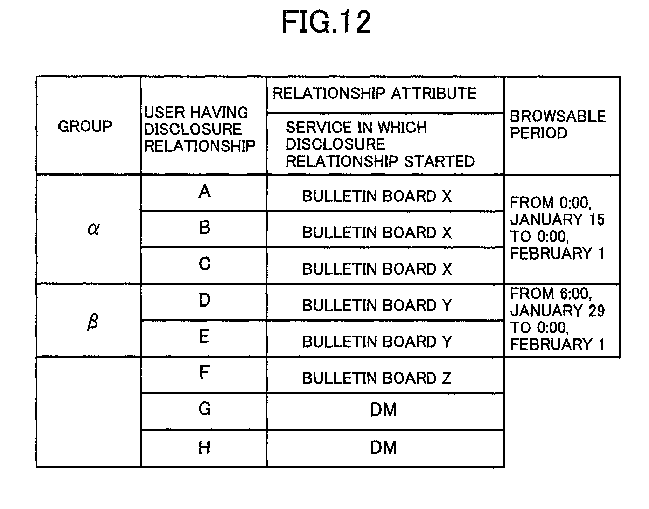

The setter 5 sets groups each including multiple users, on the basis of the disclosure relationship database in FIG. 5. FIG. 12 shows part of the disclosure relationship database. The setter 5 groups the users A, B, and C, who have in common the bulletin board X as the service in which the disclosure relationship started, into a group α. In addition, the setter 5 groups the users D and E, who have in common the bulletin board Y as the service in which the disclosure relationship started, into a group β. As for the users F, G, and H having different services each as the service in which the disclosure relationship started, the setter 5 does not set any group. The data to be disclosed is considered to be common for the users of each group using the same bulletin board, that is, for the users A, B, and C constituting the group α, and for the users D and E constituting the group β. For example, the comments that the poster has written in the bulletin board X tend to be allowed to be disclosed to the users A, B, and C constituting the group α each having the bulletin board X as the service in which the disclosure relationship was established.

Next, the setter 5 sets a browsable period for each group. For example, as shown in FIG. 12, the setter 5 sets a period from 0:00, January 15 to 0:00, February 1, for the group α. Meanwhile, the setter 5 sets, for the group β, a period from 6:00, January 29 to 0:00, February 1, which is shorter than that for the group α. Consequently, the data with the posted time and date being within the browsable period from 0:00, January 15 to 0:00, February 1 is disclosed to the users A, B, and C. Meanwhile, the data with the posted time and date being within the browsable period from 6:00, January 29 to 0:00, February 1 is disclosed to the users D and E.

Specifically, the setter 5 sets groups, and then sets a period for each of the groups. More specifically, the CPU 10 sets groups each including multiple users, on the basis of the relationship attributes in the disclosure relationship database in FIG. 5, and then sets a browsable period for each of the groups thus set.

According to Embodiment 4 described above, the setter 5 sets groups each including multiple users, on the basis of the relationship attributes, and then sets a browsable period for each group. According to such configuration, the same data can be disclosed, for example, to the users having the same relationship attribute, and thereby the range of data to be disclosed can be set more appropriately.

Alternatively, the setter 5 may set a closeness degree as in above-described Embodiment 2 for each group, and then set a browsable period for the group on the basis of the closeness degree. Specifically, the setter 5 sets a closeness degree of each group by adding up the closeness degrees of the respective users constituting the group. Alternatively, instead of using the length of the disclosure relationship, the setter 5 may group the users with parameters such as the number of users in common, the number of bulletin boards in common, the number of times having communications, and the number of times transmitting or receiving a DM are larger than or equal to a predetermined value into one group, or may group the users each having the parameters less than a predetermined value into one group.

### (Embodiment 5)

Next, a server device 100 according to Embodiment 5 will be described.

The hardware configuration of the server device 100 according to Embodiment 5 is the same as that of above-described Embodiment 3. The functional configuration of the server device 100 according to Embodiment 5 is different from that in above-described Embodiment 3 in that the function to be described below is added to the setter 5 in addition to the functions of the respective units in above-described Embodiment 3.

When the value of a closeness degree updated by the setter 5 is less than a predetermined value, the controller 6 does not respond to any data access request from the user having the closeness degree. For example, assume that the "number of bulletin boards in common" of the user G is updated to "0" and the value of the closeness degree of the user G is updated to "10" by the setter 5. When the predetermined value is a "closeness degree of 11 ", the value of the closeness degree of the user G is less than the predetermined value. Accordingly, even if a data access request is transmitted by the user terminal 407 of the user G, the controller 6 does not transmit the data to the user terminal 407. The controller 6 may delete the entry of the user G from the disclosure relationship database when the value of the closeness degree of the user G is decreased to a value less than the predetermined value.

According to Embodiment 5 described above, when the value of an updated closeness degree is less than the predetermined value, the controller 6 does not respond to any data access request from the user having the closeness degree. Hence, disclosure of corresponding data is stopped for the users each having a relationship with the poster that has become weaker, and therefore the range of data to be disclosed can be reduced appropriately.

In the above embodiments, description has been given in the case where data posted to an SNS is disclosed to the users A to H. However, the present disclosure can also be applied to a case where data posted to an SNS by any of the users A to H is disclosed to the poster.

Moreover, in the above embodiments, description has been given by taking an SNS as an example. However, the present disclosure can also be applied to blogs, microblogs, twitter sites, and the like.

Moreover, all of or some of the communications between the server device 100 and the poster terminal 300 and user terminals 401 to 408 via the communication network 200may be wireless communications.

Furthermore, each of the poster terminal 300 and the user terminals 401 to 408 in the above embodiments may be, for example, a PHS (Personal Handy-phone System), a PDA (Personal Digital Assistant), a mobile phone, a mobile device such as a smartphone, a laptop computer, a digital camera, a game console, or the like.

Furthermore, the programs to be executed by the CPU 10 in the above embodiments may be distributed in the form of being stored in non-transitory computer-readable recording medium such as a flexible disk, a CD-ROM (Compact Disc Read-only Memory), a DVD (Digital Versatile Disc), an MO (Magneto-Optical disc), or the like. In this case, the processes in each of the above-described embodiments may be performed by installing the programs in PCs.

Alternatively, the programs may be stored in a disk device or the like included in a predetermined server device in the communication network 200, and thereby be downloaded by PCs.

When the processes in any of the above embodiments are implemented by the OS and the programs in cooperation, only the part other than the OS may be stored in medium and distributed. Alternatively, the programs corresponding to the part other than the OS, which are stored in the medium, may be downloaded by PCs.

Various embodiments and alternations can be made to the present disclosure without departing from the broad spirit and scope of the present disclosure. The above embodiments are provided only for explanatory purposes, and not to limit the scope of the present disclosure. In other words, the scope of the present disclosure is defined by the claims and not by the embodiments. In addition, various alternations made within the claims and the meaning of the disclosure equivalent to the claims are intended to fall within the scope of the present disclosure.

Some of or all of the above embodiments can be described as the following supplementary notes, although not limited thereto.

### (Supplementary Note 1)

A server device comprising:
a data storage that stores data of a poster that is transmitted from a terminal, in association with a time and date at which the data was transmitted;
a setter that sets, for identification information of a user who is to browse the data of the poster, a browsable period for allowing the user to browse the data transmitted in the period; and
a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.

### (Supplementary Note 2)

The server device according to Supplementary Note 1, further comprising an attribute storage that stores a relationship attribute indicating relationship between the poster and the user, wherein
the setter sets the browsable period on the basis of the relationship attribute stored in the attribute storage.

### (Supplementary Note 3)

The server device according to Supplementary Note 2, wherein
the relationship attribute includes a parameter showing as an index that indicaties strength of the relationship between the poster and the user.

### (Supplementary Note 4)

The server device according to Supplementary Note 2 or 3, wherein
the setter sets closeness degree indicating degree of closeness between the poster and the user, on the basis of the relationship attribute stored in the attribute storage, and sets the browsable period on the basis of the closeness degree.

### (Supplementary Note 5)

The server device according to Supplementary Note 4, wherein
the setter updates the closeness degree when the relationship attribute stored in the attribute storage is updated.

### (Supplementary Note 6)

The server device according to any one of Supplementary Notes 2 to 5, wherein
the setter sets a group including a plurality of users, on the basis of the relationship attribute stored in the attribute storage, and sets the browsable period for the group.

### (Supplementary Note 7)

The server device according to Supplementary Note 5, wherein
when a value of the closeness degree updated by the setter is less than a predetermined value, the controller does not respond to any data access request from the user having the closeness degree.

### (Supplementary Note 8)

An information disclosure controlling method comprising:
a data storing step of storing data of a poster that is transmitted from a terminal, in association with a time and date at which the data was transmitted;
a setting step of setting, for identification information of a user who is to browse the data of the poster, a browsable period for allowing the user to browse the data transmitted in the period; and
a controlling step of, in response to a data access request from the user transmitted from a terminal of the user, referring to the time and date of the data stored in the data storing step and the browsable period set for the identification information of the user included in the data access request, and transmitting the data transmitted at the time and date, to the terminal of the user when the time and date are within the browsable period.

### (Supplementary Note 9)

A non-transitory computer readable recording medium storing a program for causing a computer to function as:
a data storage that stores data of a poster that is transmitted from a terminal, in association with a time and date at which the data was transmitted;
a setter that sets, for identification information of a user who is to browse the data of the poster, a browsable period for allowing the user to browse the data transmitted in the period; and
a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.

The present disclosure is based on Japanese Patent Application No. 2012-034375 filed on February 20, 2012. The description, the claims and the drawings of Japanese Patent Application No. 2012-034375 are intended to be entirely incorporated in the present description by reference.

### Reference Signs List

- 1: Communication unit
- 2: Data storage
- 3: Attribute storage
- 4: Timer
- 5: Setter
- 6: Controller
- 10: CPU
- 20: ROM
- 30: RAM
- 40: External storage
- 50: Timer
- 60: Communication interface
- 100: Server device
- 200: Communication network
- 300: Poster terminal
- 400 to 408: User terminal
- 500: Communication system

## Claims

1. A server device comprising:
a data storage that stores data of a poster that is transmitted from a terminal, in association with a time and date at which the data was transmitted;
a setter that sets, for identification information of a user who is to browse the data of the poster, a browsable period for allowing the user to browse the data transmitted in the period; and
a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.

2. The server device according to Claim 1, further comprising an attribute storage that stores a relationship attribute indicating relationship between the poster and the user, wherein
the setter sets the browsable period on the basis of the relationship attribute stored in the attribute storage.

3. The server device according to Claim 2, wherein
the relationship attribute includes a parameter showing as an index that indicaties strength of the relationship between the poster and the user.

4. The server device according to Claim 2 or 3, wherein
the setter sets closeness degree indicating degree of closeness between the poster and the user, on the basis of the relationship attribute stored in the attribute storage, and sets the browsable period on the basis of the closeness degree.

5. The server device according to Claim 4, wherein
the setter updates the closeness degree when the relationship attribute stored in the attribute storage is updated.

6. The server device according to any one of Claims 2 to 5, wherein
the setter sets a group including a plurality of users, on the basis of the relationship attribute stored in the attribute storage, and sets the browsable period for the group.

7. The server device according to Claim 5, wherein
when a value of the closeness degree updated by the setter is less than a predetermined value, the controller does not respond to any data access request from the user having the closeness degree.

8. An information disclosure controlling method comprising:
a data storing step of storing data of a poster that is transmitted from a terminal, in association with a time and date at which the data was transmitted;
a setting step of setting, for identification information of a user who is to browse the data of the poster, a browsable period for allowing the user to browse the data transmitted in the period; and
a controlling step of, in response to a data access request from the user transmitted from a terminal of the user, referring to the time and date of the data stored in the data storing step and the browsable period set for the identification information of the user included in the data access request, and transmitting the data transmitted at the time and date, to the terminal of the user when the time and date are within the browsable period.

9. A non-transitory computer readable recording medium recording a program for causing a computer to function as:
a data storage that stores data of a poster that is transmitted from a terminal, in association with a time and date at which the data was transmitted;
a setter that sets, for identification information of a user who is to browse the data of the poster, a browsable period for allowing the user to browse the data transmitted in the period; and
a controller that, in response to a data access request from the user transmitted from a terminal of the user, refers to the time and date of the data stored in the data storage and the browsable period set for the identification information of the user included in the data access request, and transmits the data transmitted at the time and date, to the terminal of the user when the time and date are within the browsable period.
